# EUROPEAN PATENT APPLICATION

(11) **EP 4 366 334 A1**
(43) Date of publication of application: **08.05.2024**
(21) Application number: 22836651.4
(22) Date of filing: 31.05.2022
(51) Int. Cl.: H04W 4/14, H04W 4/20

(54) **MESSAGE PROCESSING METHOD, ELECTRONIC DEVICE, AND STORAGE MEDIUM**

(30) Priority: 07.07.2021 CN 202110765320
(71) Applicant: ZTE Corporation, Shenzhen, Guangdong 518057 (CN)
(72) Inventor: PENG, Jiaoyang, Shenzhen, Guangdong 518057 (CN); GENG, Changjian, Shenzhen, Guangdong 518057 (CN); ZHANG, Pengfei, Shenzhen, Guangdong 518057 (CN); WANG, Wei, Shenzhen, Guangdong 518057 (CN)
(74) Representative: Cristinelli, Luca
(86) International application number: PCT/CN2022/096412
(87) International publication number: WO 2023/279896

(57) **Abstract**

The embodiments of the present disclosure relate to the technical field of communications. Provided are a method for processing a message, an electronic device and a storage medium. The method includes: after receiving a short message, firstly acquiring a signaling simplification flow corresponding to the short message, wherein the signaling simplification flow is generated after simplifying a signaling standard flow; then a signaling operation is performed on the short message according to the signaling simplification flow.

## Description

### Cross-Reference to Related Application

This disclosure is based upon and claims the priority to Chinese Patent Application No. 202110765320.6, filed on July 07, 2021, and the entire disclosure of which is incorporated herein by reference.

### Technical Field

Embodiments of the present disclosure relate to the field of communications technologies, and in particular, to method for processing a message, an electronic device, and a storage medium.

### Background

A short message, as a must-be-sent information transceiver channel of the network, will continue to exist for a long time in the 5G era. A Short Message Service Function (SMSF) is an important short message service network element in a 5G core network, and is an interface and bridge for a terminal to receive and send 5G short messages between the 5G core network and a traditional Short Message Service Center (SMSC).

Since each network element in the 5G network uses a service interface to transmit messages, many signaling interfaces are involved in the message interaction process, which greatly increases the error probability of message interaction and also reduces the efficiency of message transmission.

### Summary

Embodiments of the present disclosure provide a method for processing a message, including: receiving a short message; acquiring a signaling simplification flow corresponding to a short message, wherein the signaling simplification flow is generated after simplifying a signaling standard flow; performing a signaling operation on the short message according to a signaling simplification flow.

An embodiment of the present disclosure further provides an electronic device, including:
at least one processor; and
a memory communicatively coupled to the at least one processor; wherein
the memory stores an instruction that can be executed by the at least one processor, when the instruction is executed by the at least one processor, the instruction is configured to cause the at least one processor execute the above method for processing a message.

An embodiment of the present disclosure further provides a computer readable storage medium, which stores a computer program. When the computer program is executed by a processor, the computer program is configured to implement the above method for processing a message.

### Brief Description of the Drawings

Figure 1 is a first specific flowchart of method for processing a message according to an embodiment of the present disclosure;
Figure 2 is a second specific flowchart of a method for processing a message according to an embodiment of the present disclosure;
Figure 3 is a third specific flowchart of a method for processing a message according to an embodiment of the present disclosure; and
Figure 4 is a schematic structural diagram of an electronic device according to an embodiment of the present disclosure.

### Detailed Description of the Embodiments

To make the objectives, technical solutions, and advantages of the embodiments of the present disclosure clearer, the following describes each embodiment of the present disclosure in detail with reference to the accompanying drawings. However, a person of ordinary skill in the art may understand that, in the embodiments of the present disclosure, many technical details are put forward to help a reader understand the present disclosure better. However, even without these technical details and various changes and modifications based on the following embodiments, the claimed technical solutions of the present disclosure can be implemented.

The purpose of the embodiments of the present disclosure is to provide a method for processing a message, an electronic device and a storage medium, which can effectively reduce the error probability of message interaction in a 5G network, and at the same time improve the efficiency of message transmission.

The method for processing a message provided in the embodiments of the present disclosure comprises: after receiving a short message, firstly acquiring a signaling simplification flow corresponding to the short message, wherein the signaling simplification flow is generated after simplifying a signaling standard flow; then, a signaling operation is performed on the short message according to the signaling simplification flow. Since the signaling flow is simplified, a signaling operation procedure and the amount of messages subsequently executed for a short message are reduced to some extent, thereby effectively reducing the error probability of message interaction and improving the efficiency of message transmission at the same time.

An embodiment of the present disclosure relates to a method for processing a message, which may be applied to an SMSF in a 5G network.

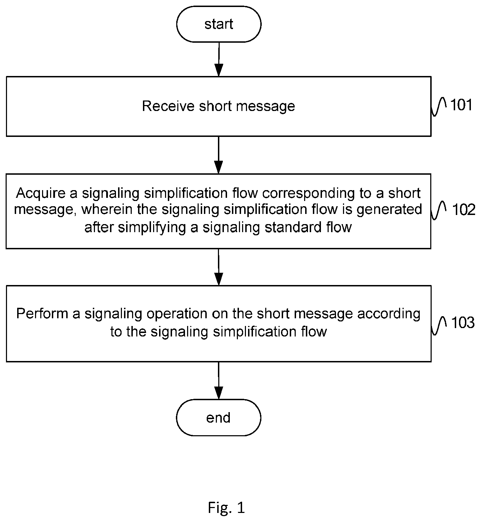

As shown in figure 1, a method for processing a message provided in this embodiment includes the following steps.

Step 101: receiving a short message.

A SMSF is a 5G short message service network element conforming to a 3GPP 29.540 standard protocol in a 5G core network, and interacts with an Access and Mobility Management Function element (AMF) in the 5G core network through an N2O interface, and interacts with Unified Data Management (UDM) through an N21 interface; and a Mobile Application Part (MAP) and other interface protocols are butt-jointed with a Short Message Service Center (SMSC)/IP MGW, so as to provide registration, deregistration and receiving NAS short message services for a 5G terminal user.

The short message in this step may be a short message sent by any 5G network element interacting with the SMSF to the SMSF, and may include any one of a registration message, a deregistration message, a originating call message and a terminating call message.

Step 102: obtaining a signaling simplification flow corresponding to the short message, wherein the signaling simplification flow is generated after simplifying a signaling standard flow.

In this embodiment, after receiving the short message sent by the external 5G network element, the SMSF does not use a signaling standard flow to perform a subsequent signaling operation on the short message as usual, but obtains a signaling simplification flow corresponding to the short message, and the signaling simplification flow is generated after simplifying the signaling standard flow.

In a practical scenario, the signaling flow is mainly used for synchronizing the state of each related device, and when some 5G network elements send short messages with repeated types or repeated users, the corresponding subsequent signaling flows overlap greatly. Since the states to be synchronized in these overlapping signaling flows are already provided by related devices, there is no need to perform these signaling flows any longer, and the synchronized states need to be synchronized repeatedly.

Based on the occurrence of the problem, the present embodiment proposes a concept of simplifying a signaling flow, i.e., simplifying a signaling standard flow to adaptively obtain a simplified signaling flow for each short message, i.e., a simplified signaling flow. After receiving the short message sent by the external 5G network element, the SMSF acquires a signaling simplification flow corresponding to the current short message, and the signaling simplification flow can be generated by a pre-set signaling optimization module.

Step 103: performing a signaling operation on the short message according to a signaling simplification flow.

In this embodiment, according to the obtained simplified signaling flow, a simplified signaling operation is performed on the short message compared with the signaling standard flow, so as to accelerate the transmission of the short message to the front-end.

The method for processing a message provided in the embodiments of the present disclosure comprises: after receiving a short message, firstly acquiring a signaling simplification flow corresponding to the short message, wherein the signaling simplification flow is generated after simplifying a signaling standard flow; then, a signaling operation is performed on the short message according to the signaling simplification flow. Since the signaling flow is simplified, a signaling operation procedure and the amount of messages subsequently executed for a short message are reduced to some extent, thereby effectively reducing the error probability of message interaction and improving the efficiency of message transmission at the same time.

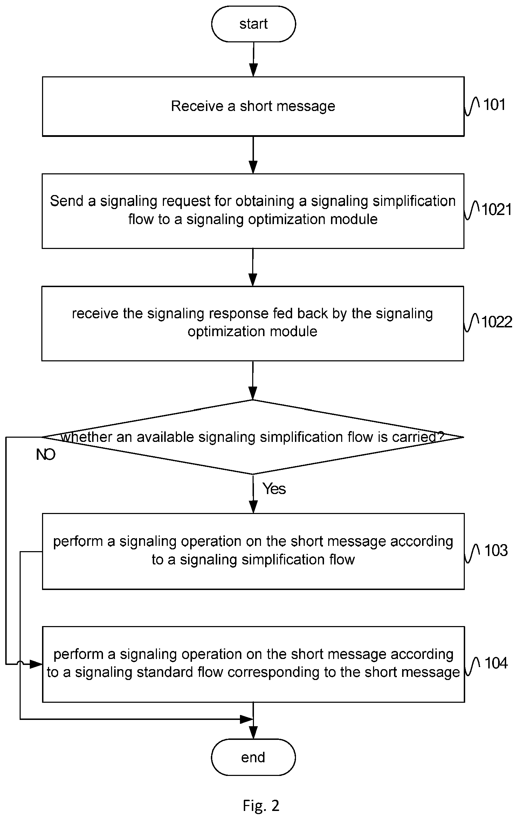

Another embodiment of the present disclosure relates to a method for processing a message. In this embodiment, the signaling reduction process corresponding to the short message is obtained based on the signaling optimization module. Correspondingly, as shown in figure 2, step 102 may specifically include the following sub-steps.

Sub-step 1021: sending a signaling request for obtaining a signaling simplification flow to a signaling optimization module.

The signaling optimization module may be built in the SMSC or be set separately from the SMSC. Based on the information request sent by the SMSC, the signaling optimization module may generate and provide a signaling simplification flow for the short message.

In this embodiment, the process of generating the simplified signaling flow by the signaling optimizing module may include the following steps.

Step 1: inquiring whether locally the history signaling cache data of the short message of the same type sent by the sending end of the short message is cached.

In this embodiment, the signaling optimization component may identify the sender of the short message according to an International Mobile Subscriber Identification Number (IMSI) carried in the signaling request. The IMSI is used as a key to query whether the history signaling cache data of the history short message of the same type as the current short message exists in the local first-level cache. In other words, it is queried whether the sending end has sent a history short message of the same type as the current short message, and the history signaling cache data corresponding to the history short message, i.e., the synchronized related state, is stored.

Step 2: if history signaling cache data is found, simplifying a signaling standard flow based on the history signaling cache data to obtain a simplified signaling procedure.

If the history signaling cache data is found, the signaling standard flow can be simplified based on the history signaling cache data, and the signaling part having generated the history signaling cache data is deleted therefrom to obtain a simplified signaling flow, i.e., a simplified signaling flow.

Sub-step 1022: receiving the signaling response fed back by the signaling optimization module.

In this embodiment, the signaling optimization module provides a simplified signaling flow of the short message by sending a signaling response to the SMSF.

When the signaling simplification flow carried in the signaling response is available, step 103 is performed, and the subsequent signaling operations are performed on the short message according to the signaling simplification flow.

When the signaling simplification flow carried in the signaling response is not available, or the signaling simplification flow is not carried, or the signaling response is not received within a preset time (not shown in the two subsequent situation diagrams), step 104 is executed, and the signaling operation is executed on the short message according to the signaling standard flow corresponding to the short message.

In this embodiment, after receiving the signaling response carrying the signaling simplification flow, the SMSC verifies the availability of the signaling simplification flow. If the verification is available, a subsequent signaling operation is executed on the short message according to the signaling simplification flow, simplifying the signaling flow of a real operation. If the verification is not available, performing a standard signaling operation on the short message according to an original signaling standard flow.

In addition, if the received signaling response does not carry a signaling simplification flow, or if no signaling response is received within a preset time, it is considered that the operation of obtaining the signaling simplification flow fails, and then a standard signaling operation is performed on the short message according to an original signaling standard flow.

In the embodiments of the present disclosure, a signaling request is sent to a signaling optimization module to obtain a signaling simplification flow; by using an independent calculation processing capability of a signaling optimization module, the process of acquiring a signaling simplification flow is effectively ensured.

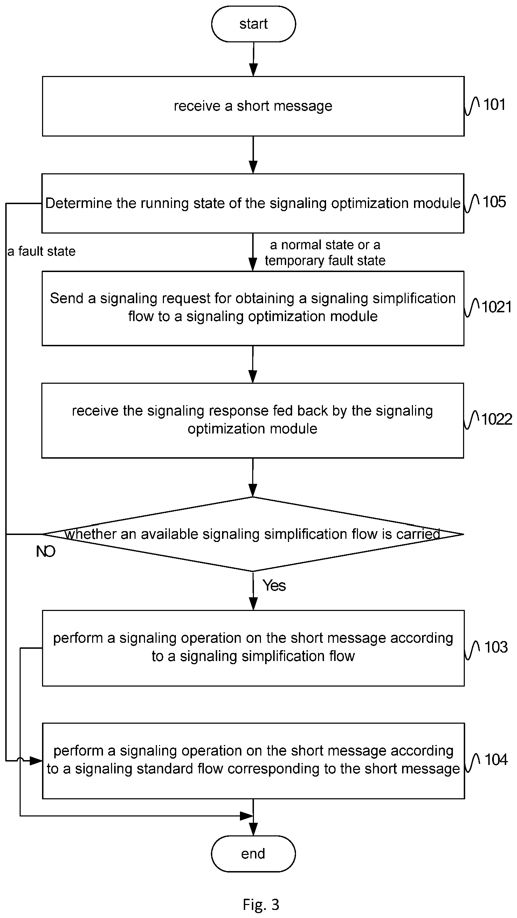

Another embodiment of the present disclosure relates to a method for processing a message. In this embodiment, it is determined whether to obtain the signaling simplification flow from the signaling optimization module by judging the running state of the signaling optimization module. Correspondingly, on the basis of the previous method embodiment, as shown in figure 3, the foregoing method for processing a message further includes the following steps.

Step 105: determining a running state of the signaling optimization module.

The running state of the signaling optimization module may include a normal state, a temporary fault state and a fault state.

In this embodiment, the following two manners may be adopted to determine the running state of the signaling optimization module by determining whether the signaling optimization module is reachable.

Manner 1: send detection information to a signaling optimization module periodically, and update a running state of the signaling optimization module according to a detection result.

Wherein when a detection result is information reachable, a running state of a signaling optimization module is set to be a normal state; when the detection result indicates that the information is unreachable, setting the running state of the signaling optimization module to be a temporary fault state; setting the running state of the signaling optimization module to be the fault state when the number of the instances of the temporary fault state continuously exceeds a preset number of times based on the detection result.

In this embodiment, the SMSF may actively send detection information to the signaling optimization module periodically without depending on a trigger action of receiving a short message. The purpose of the detection information is to detect whether a communication channel between the SMSF and the signaling optimization module is reachable. Updating the running state of the signaling optimization module according to the detection result.

In this embodiment, when the detection result indicates that the information is reachable, the running status of the signaling optimization module is set to be normal. When the signaling optimization module is in a normal state, after the SMSF sends a signaling request to the signaling optimization module, the SMSF can quickly receive the signaling response fed back by the signaling optimization module. And when the detection result indicates that the information is not available, set the running state of the signaling optimization module to a temporary fault state. When the signaling optimization module is in a temporary fault state, after sending a signaling request to the signaling optimization module, the SMSF may not receive a signaling response fed back by the signaling optimization module quickly or soon. On this basis, if the number of times of successively setting a temporary fault state exceeds a pre-set number of times based on a detection result, it is highly possible that a permanent fault occurs in a signaling optimization module, and a running state of the signaling optimization module should be set to be a fault state. When the signaling optimization module is in a failure state, after the SMSF sends a signaling request to the signaling optimization module, it is highly possible that the SMSF cannot receive a signaling response fed back by the signaling optimization module.

Manner 2: when the signaling simplification flow carried in the signaling response is not available, the signaling simplification flow is not carried, or the signaling response is not received within a preset time, the running state of the signaling optimization module is set to be a temporary fault state; setting the running state of the signaling optimization module to be the fault state when the number of the temporary fault states exceeds a preset number continuously based on the signaling response.

In this embodiment, the SMSF may passively determine a running state of the signaling optimization module depending on a trigger action for receiving a short message, and a determination basis mainly depends on a situation that the signaling optimization module feeds back a signaling response.

In this embodiment, when the signaling simplification flow carried in the signaling response is unavailable, or the signaling simplification flow is not carried, or the signaling response is not received within a preset time, both indicate that a fault may occur in the signaling optimization module, and in this case, the running state of the signaling optimization module may be set to a temporary fault state; when the number of times of setting the temporary fault status continuously exceeds the preset number of times based on the signaling ring, it indicates that the probability of the fault occurring is large, and at this time, the operation status of the signaling optimization module is set to the fault status.

On this basis, when the running state of the signaling optimization module is a normal state or a temporary fault state, sub-step 1021 is executed, and the operation of obtaining the signaling request of the signaling reduction process is sent to the signaling optimization module.

When the running state of the signaling optimization module is the fault state, step 104 is executed to perform signaling operations on the short message according to the signaling standard flow corresponding to the short message.

By judging the running state of the signaling optimization module to determine whether to send a signaling request for obtaining a signaling simplification flow to the signaling optimization module, the waste of time and resources caused by the fact that the signaling request is still sent to the signaling optimization module in the case that the signaling optimization module cannot return an available signaling simplification flow can be avoided.

In addition, before executing step 104 to execute the signaling operation on the short message according to the signaling standard flow corresponding to the short message, the method can further comprise the following steps.

Step 1: it is determined whether to trigger a signaling standard flow according to a short message delivery success rate of the current system. Specifically, since the signaling standard flow process is relatively complex, in order to reduce the waste of unnecessary time and resources, before the signaling standard flow is executed, it can be determined whether the signaling standard flow can be triggered according to the short message delivery success rate of the current system. Wherein, the higher the short message delivery success rate is, the higher the possibility of triggering the signaling standard flow is determined.

Step 2: when it is determined to trigger the signaling standard flow, executing the processing of the signaling operation on the short message according to the signaling standard flow corresponding to the short message.

Step 3: when it is determined not to trigger the signaling standard flow, the signaling operation on the short message is rejected.

In this embodiment, whether to send a signaling request for obtaining a signaling simplification flow to a signaling optimization module is determined by judging a running state of the signaling optimization module, thereby avoiding a waste of time and resources caused by the fact that the signaling request is still sent to the signaling optimization module when the signaling optimization module cannot return an available signaling simplification flow.

In addition, it is determined whether to trigger a signaling standard flow according to a preset influence factor and a success rate of delivery of the short message in a current system, and a decision of the triggering signaling standard flow can be evaluated and guided.

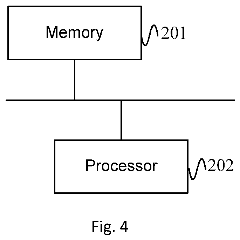

Another embodiment of the present disclosure relates to an electronic device. As shown in figure 4, the electronic device comprises at least one processor 202; and a memory communicatively coupled to the at least one processor 202; the memory 201 stores an instruction that can be executed by the at least one processor 202, where the instruction is executed by the at least one processor 202, so that the at least one processor 202 can execute any one of the foregoing method embodiments.

The memory 201 and the processor 202 are connected in a bus manner, the bus may include any number of interconnected buses and bridges, and the bus connects various circuits of the one or more processors 202 and the memory 201 together. The bus may also connect a variety of other circuits, such as peripheral devices, voltage regulators, and power management circuitry, which are well known in the art and therefore are not described further herein. The bus interface provides an interface between the bus and the transceiver. A transceiver may be one element or multiple elements, such as multiple receivers and transmitters, that provide a means for communicating with various other devices over a transmission medium. Data processed by the processor 202 is transmitted over a wireless medium via an antenna, and further, the antenna receives the data and transmits the data to the processor 202.

The processor 202 is responsible for managing a bus and general processing, and can further provide various functions, including timing, peripheral interfaces, voltage regulation, power management, and other control functions. And the memory 201 may be used to store data used by the processor 202 when performing operations.

Another embodiment of the present disclosure relates to a computer readable storage medium, which stores a computer program. The computer program implements any method embodiment described above when being executed by a processor.

That is, a person skilled in the art may understand that all or a part of the steps of the methods in the foregoing embodiments may be implemented by a program instructing relevant hardware. The program is stored in a storage medium and includes several instructions for instructing a device (which may be a single chip, a chip, or the like) or a processor to execute all or a part of the steps of the methods in the embodiments of the present disclosure. The foregoing storage medium includes: any medium that can store program codes, such as a USB flash disk, a removable hard disk, a read-only memory (ROM), a random access memory (RAM), a magnetic disk, or an optical disk.

A person of ordinary skill in the art may understand that the foregoing embodiments are specific embodiments for implementing the present disclosure, and in practical applications, various changes may be made in form and details without departing from the spirit and scope of the present disclosure.

## Claims

1. A method for processing a message, comprising:
receiving a short message;
acquiring a signaling simplification flow corresponding to the short message, wherein the signaling simplification flow is generated after simplifying a signaling standard flow; and
performing a signaling operation on the short message according to the signaling simplification flow.

2. The method according to claim 1, wherein the step of obtaining a signaling simplification flow corresponding to the short message comprises:
sending a signaling request for obtaining the signaling simplification flow to a signaling optimization module;
receive a signaling response fed back by the signaling optimization module;
when the signaling simplification flow carried in the signaling response is available, executing a subsequent signaling operation on the short message according to the signaling simplification flow; and
when the signaling simplification flow carried in the signaling response is unavailable, or the signaling simplification flow is not carried, or the signaling response is not received within a pre-set time, executing a signaling operation on the short message according to the signaling standard flow corresponding to the short message.

3. The method according to claim 2, wherein a process of generating the signaling simplification flow by the signaling optimization module comprises:
inquiring whether history signaling cache data of a same type of history short messages sent by the short message sending end is locally cached; and
when the history signaling cache data is found, simplifying the signaling standard flow based on the history signaling cache data to obtain the signaling simplification flow.

4. The method according to claim 2, wherein before sending, to a signaling optimization module, a signaling request for obtaining the signaling simplification flow, the method comprises:
determining a running state of the signaling optimization module;
when the running state of the signaling optimization module is a normal state or a temporary fault state, executing the operation of sending a signaling request for obtaining the signaling simplification flow to the signaling optimization module; and
when the running state of the signaling optimization module is a fault state, executing a signaling operation on the short message according to a signaling standard process corresponding to the short message.

5. The method according to claim 4, wherein the method comprises:
periodically sending detection information to the signaling optimization module, and updating the running state of the signaling optimization module according to a detection result;
wherein when the detection result is that the detection information is reachable, setting the running state of the signaling optimization module as the normal state; when the detection result is that the detection information is not reachable, setting the running state of the signaling optimization module as the temporary fault state; when a number of times of the temporary fault state set based on the detection result continuously exceeds a pre-set number of times, setting the running state of the signaling optimization module as the fault state.

6. The method according to claim 5, wherein the method comprises:
when the signaling simplification flow carried in the signaling response is unavailable, or the signaling simplification flow is not carried, or the signaling response is not received within a preset time, setting the running state of the signaling optimization module as the temporary fault state; setting the running state of the signaling optimization module as the fault state when the number of the temporary fault states set based on the signaling response continuously exceeds a preset number.

7. The method according to any one of claims 1, 2 and 4, wherein before performing the signaling operation on the short message according to the signaling standard flow corresponding to the short message, the method comprises:
determining whether to trigger the signaling standard flow according to a success rate of delivery of the short message in a current system;
when it is determined that the signaling standard flow is triggered, executing the signaling standard flow corresponding to the short message, and performing the signaling operation on the short message; and
when it is determined not to trigger the signaling standard flow, refusing to perform the signaling operation on the short message.

8. The method according to any one of claims 1-7, wherein the short message comprises any one of the following: a registration message, a deregistration message, a mobile originate message and a mobile terminated message.

9. An electronic device, comprising:
at least one processor; and
a memory communicatively coupled to the at least one processor; wherein,
the memory stores an instruction executable by the at least one processor, and the instruction is configured to, when being executed by the at least one processor, cause the at least one processor to perform the method for processing a message as claimed in any one of claims 1 to 8.

10. A computer readable storage medium, storing a computer program, wherein when being executed by a processor, the computer program is configured to perform the method for processing a message as claimed in any one of claims 1 to 8.
